# EUROPEAN PATENT APPLICATION

(11) **EP 1 045 002 A1**
(43) Date of publication of application: **18.10.2000**
(21) Application number: 00302100.3
(22) Date of filing: 15.03.2000
(51) Int. Cl.: C08K 5/549, C08L 83/04

(54) **Silicone rubber composition**

(30) Priority: 16.03.1999 JP 7100499
(71) Applicant: Dow Corning Toray Silicone Co., Ltd., Tokyo (JP)
(72) Inventor: Sato, Takahiro Dow Corning Toray Sil. Co., Ltd., Ichihara-shi, Chiba Prefecture (JP); Takuman, Osamu Dow Corning Toray Sil. Co., Ltd., Ichihara-shi, Chiba Prefecture (JP); Yoshitake, Makoto Dow Corning Toray Sil. Co., Ltd., Ichihara-shi, Chiba Prefecture (JP); Nakamura, Akito Dow Corning Toray Sil. Co., Ltd., Ichihara-shi, Chiba Prefecture (JP)
(74) Representative: Kyle, Diana

(57) **Abstract**

A silicone rubber composition comprising
(A) 100 weight parts of a polydiorganosiloxane,
(B) 10 to 100 weight parts of a reinforcing filler,
(C) 0.1 to 10 weight parts of a silatrane derivative described by general formula 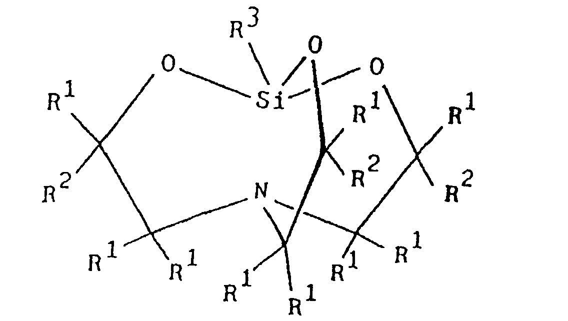 where each R¹ is independently selected from the group consisting of hydrogen atom and alkyl groups, each R² is independently selected from the group consisting of hydrogen atoms, alkyl groups, and alkenyloxyalkyl groups described by general formula

   -R⁴-O-R⁵

   where R⁴ is an alkylene group and R⁵ is an alkenyl group; at least one R² is an alkenyloxyalkyl group; and R³ is selected from alkyl groups, alkenyl groups, C₁ to C₁₀ alkoxy groups, glycidoxyalkyl groups, oxiranylalkyl groups, acyloxyalkyl groups, and aminoalkyl groups; and
(D) an organic peroxide in an amount sufficient to cure the composition.

## Description

### BACKGROUND OF INVENTION

The present invention relates to a silicone rubber composition that is curable with organic peroxides and adheres well to organic resins, and more particularly relates to a silicone rubber composition that is suitable for composite molding, has excellent mold release properties, and adheres well to organic resins during insert molding, multicolor molding, and other types of composite molding involving organic resins and silicone rubber compositions.

In conventional practice, methods in which organic resin moldings are primed and silicone rubber compositions are then bonded are adopted as methods for bonding silicone rubber compositions curable with organic peroxides to organic resins during insert molding, multicolor molding, and other types of composite molding. These methods are disadvantageous, however, in that a primer step is needed and that the silicone rubber is poorly bonded if the priming treatment is inadequate.

In addition, methods in which adhesion promoters such as vinyltrimethoxysilane, 3-glycidoxypropyltrimethoxysilane, 3-methacryloxypropyltrimethoxysilane, hydrolysates thereof, and the like or titanate catalysts such as tetrabutoxytitanium and the like are added to silicone rubber compositions curable with organic peroxides to improve the adhesion of such compositions to organic resins. However, these known methods are disadvantageous in that the silicone rubber compositions have inadequate mold release properties and cannot be used for composite molding.

The inventors perfected the present invention as a result of thoroughgoing research aimed at addressing the aforementioned problems. Specifically, it is an object of the present invention to provide a silicone rubber composition that is curable with organic peroxides and adheres well to organic resins, and to provide a silicone rubber composition that is suitable for composite molding, has excellent mold release properties, and adheres well to organic resins during insert molding, multicolor molding, and other types of composite molding involving organic resins and silicone rubber compositions.

### SUMMARY OF INVENTION

A silicone rubber composition comprising
(A) 100 weight parts of a polydiorganosiloxane,
(B) 10 to 100 weight parts of a reinforcing filler,
(C) 0.1 to 10 weight parts of a silatrane derivative described by general formula 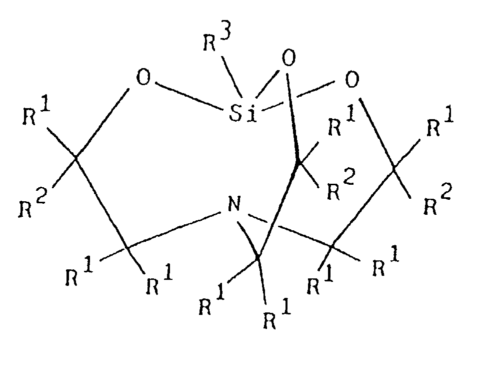 where each R¹ is independently selected from the group consisting of hydrogen atom and alkyl groups, each R² is independently selected from the group consisting of hydrogen atoms, alkyl groups, and alkenyloxyalkyl groups described by general formula

   -R⁴-O-R⁵

   where R⁴ is an alkylene group and R⁵ is an alkenyl group; at least one R² is an alkenyloxyalkyl group; and R³ is selected from alkyl groups, alkenyl groups, C₁ to C₁₀ alkoxy groups, glycidoxyalkyl groups, oxiranylalkyl groups, acyloxyalkyl groups, and aminoalkyl groups; and
(D) an organic peroxide in an amount sufficient to cure the composition.

### DESCRIPTION OF INVENTION

The silicone rubber composition of the present invention comprises
(A) 100 weight parts of a polydiorganosiloxane,
(B) 10 to 100 weight parts of a reinforcing filler,
(C) 0.1 to 10 weight parts of a silatrane derivative described by general formula 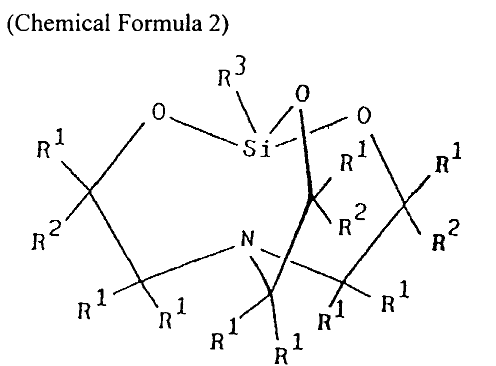 where each R¹ is independently selected from the group consisting of hydrogen atom and alkyl groups; each R² is independently selected from the group consisting of hydrogen atoms, alkyl groups, and alkenyloxyalkyl groups described by the general formula

   -R⁴-O-R⁵

   where R⁴ is an alkylene group and R⁵ is an alkenyl group; at least one R² is an alkenyloxyalkyl group; and R³ is selected from alkyl groups, alkenyl groups C₁ to C₁₀ alkoxy groups, glycidoxyalkyl groups, oxiranylalkyl groups, acyloxyalkyl groups, and aminoalkyl groups; and
(D) an organic peroxide in an amount sufficient to cure the composition.

The silicone rubber composition of the present invention will now be described in detail. The polydiorganosiloxane comprising component A is the principal component of the present composition. The molecular structure of component A is substantially linear, but part of the molecular chain may have some branching. The polydiorganosiloxane comprising component A is described by the average unit formula

RₐSiO_{(4-a)/2} .

In the formula, the majority of R groups are substituted or unsubstituted monovalent hydrocarbon groups, for example, alkyl groups such as methyl, ethyl, propyl, butyl, and octyl; alkenyl groups such as vinyl, allyl, butynyl, and hexenyl; aryl groups such as phenyl and xylyl; aralkyl groups such as benzyl and phenethyl; and halogenated alkyl groups such as 3,3,3-trifluoropropyl. Traces of hydroxyl groups or alkoxy groups such as methoxy and ethoxy groups may also be present. The a in the above formula is a number ranging from 1.9 to 2.1. In the present composition, a polydiorganosiloxane having at least two alkenyl groups in each molecule should preferably be used as component A. The degree of polymerization of such component A should preferably fall within a range of 1000 to 30,000, and particularly 3000 to 30,000. The polydiorganosiloxane of component A may range in consistency from liquids to high-viscosity gums. The polydiorganosiloxane of component A may, for example, be a silanol-terminated dimethylpolysiloxane, trimethylsiloxy-terminated dimethylpolysiloxane, dimethylvinylsiloxy-terminated dimethylsiloxane/methylvinylsiloxane copolymer, dimethylvinylsiloxy-terminated dimethylpolysiloxane, or silanol-terminated dimethylsiloxane/methylvinylsiloxane copolymer.

The reinforcing filler component B is added to the present composition to improve the mechanical strength of silicone rubber obtained by the curing of the present composition. Examples of the reinforcing filler include dry-process silica such as fumed silica and wet-process silica such as precipitation silica. It is also possible to use reinforcing silica whose surface has been rendered hydrophobic by treatment with organosilanes, organosilazanes, organopolysiloxanes, diorganocyclopolysiloxanes, and other organosilicon compounds. The particle diameter of component B should preferably be 50 µm or less, and the BET specific surface area should preferably be 50 m²/g or greater, and particularly 100 m²/g or greater.

The content of component B in the present composition preferably falls within a range of 10 to 100 weight parts per 100 weight parts of component A. This is because the mechanical strength of the resulting silicone rubber tends to decrease when the content of component B falls below the lower limit of the aforementioned range, and it becomes more difficult to uniformly distribute component B in the silicone rubber composition when the upper limit of this range is exceeded.

The silatrane derivative component C is added to the present composition to improve the adhesion of the cured silicone rubber to organic resins, and when the present composition is to be used for composite molding, this component improves the adhesion of the composition to organic resins without affecting its mold release properties. The silatrane derivative component C is described by general formula 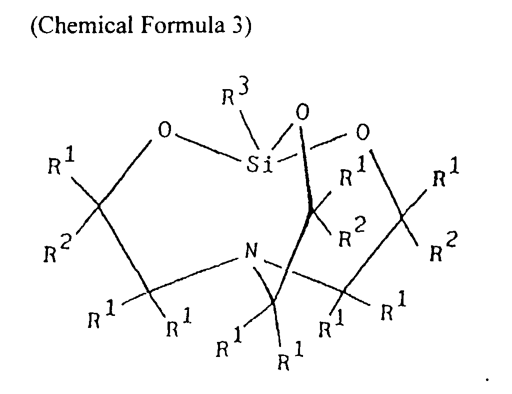 In the formula, each R¹ is independently selected from the group consisting of hydrogen atom and alkyl groups. Examples of R¹ as alkyl groups include methyl, ethyl, propyl, butyl, pentyl, isopropyl, isobutyl, cyclopentyl, and cyclohexyl. In particular, a hydrogen atom or the methyl group is preferred as R¹. Each R² in the above formula is independently selected from the group consisting of hydrogen atom, alkyl groups, and alkenyloxyalkyl groups described by the general formula

-R⁴-O-R⁵.

At least one R² group must be an alkenyloxyalkyl group. The same alkyl groups as those described above with reference to R¹ may be cited as examples of the alkyl groups represented by R². In the alkenyloxyalkyl groups which can be R², the R⁴ in the above formula is an alkylene group, examples of which include methylene, ethylene, methyl methylene, and propylene. Methylene is a preferred R⁴. R⁵ in the above formula is an alkenyl group, examples of which include vinyl, allyl, butenyl, pentenyl, and hexenyl. A C₃ to C₁₀ alkenyl group is preferred, and the allyl group is particularly preferred for R⁵. Allyloxymethyl and allyloxypropyl groups may be cited as examples of the alkenyloxyalkyl groups represented by R². R³ in the above formula is selected from the group consisting of alkyl groups, alkenyl groups, C₁ to C₁₀ alkoxy groups, glycidoxyalkyl groups, oxiranylalkyl groups, acyloxyalkyl groups, haloalkyl groups, and aminoalkyl groups. The same alkenyl groups as those described above with reference to R¹ may be cited as examples of the groups represented by R³. Examples of R³ as alkenyl groups include ethylene, propylene butylene, pentenyl, isopropylene, isobutylene, cyclopentenyl and cyclohexenyl. Examples of R³ groups as alkoxy groups include methoxy, ethoxy, and propoxy; examples of R³ groups as glycidoxyalkyl groups include 3-glycidoxypropyl; examples of R³ groups as oxiranylalkyl groups include 4-oxiranylbutyl and 8-oxiranyloctyl; examples of R³ groups as acyloxyalkyl groups include acetoxypropyl and 3-methacryloxypropyl; and examples of R³ groups as aminoalkyl groups include 3-aminopropyl and *N*-(2-aminoethyl)-3-aminopropyl.

The following compounds may be cited as examples of the silatrane derivative component C.

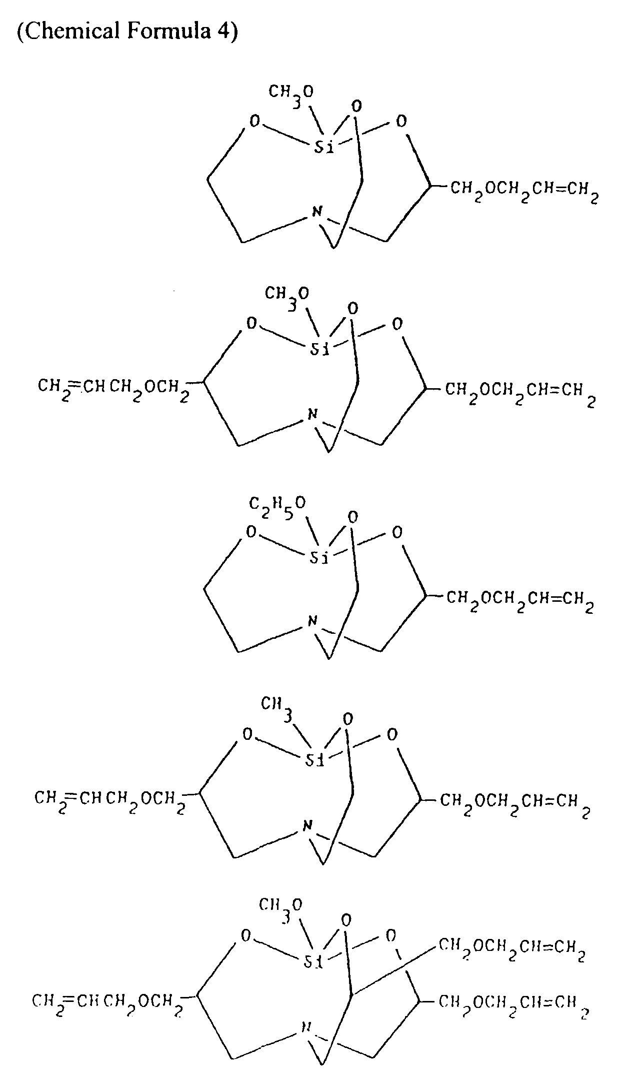

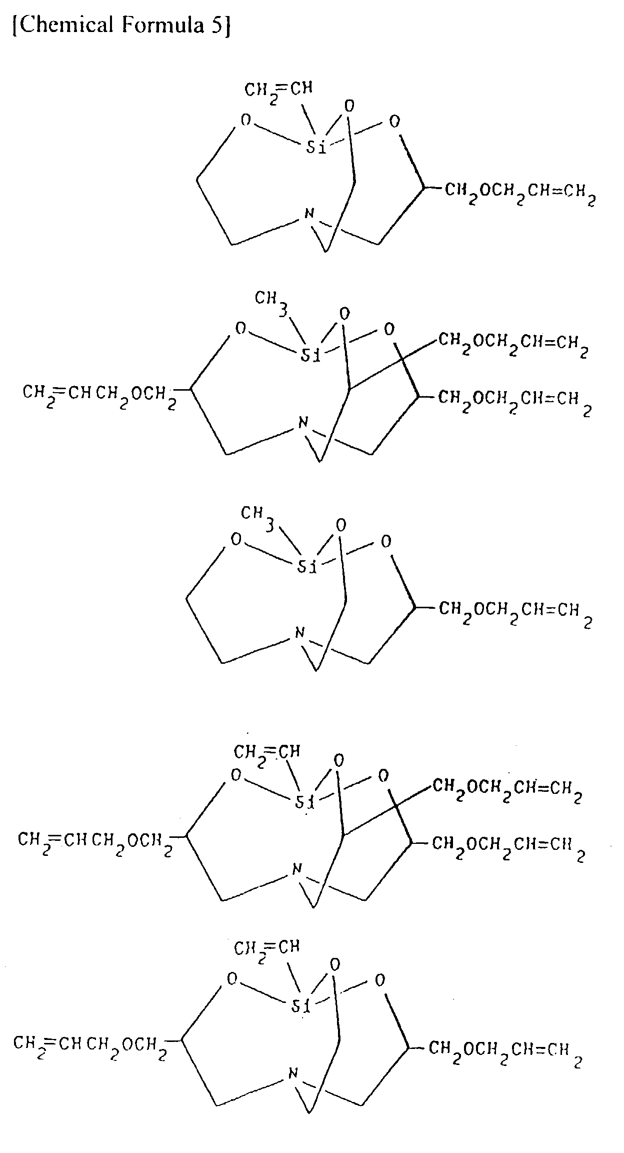

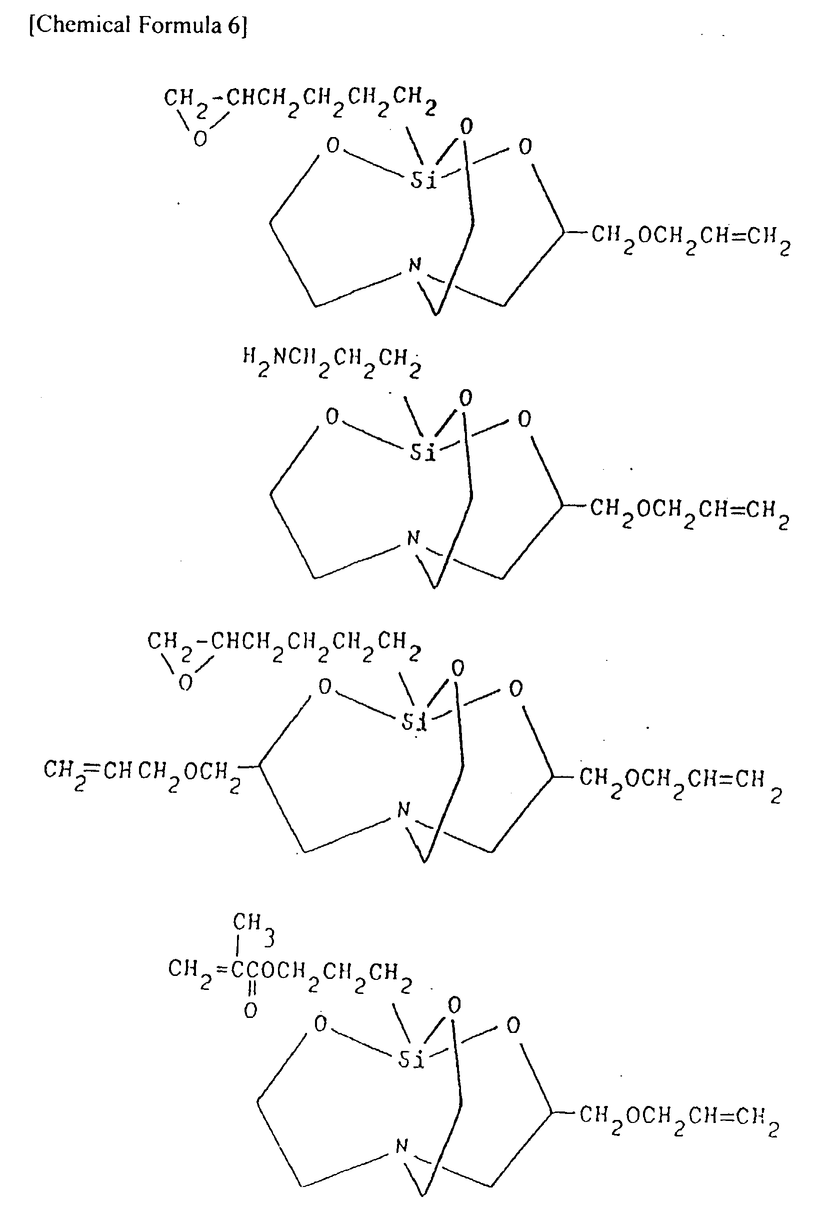

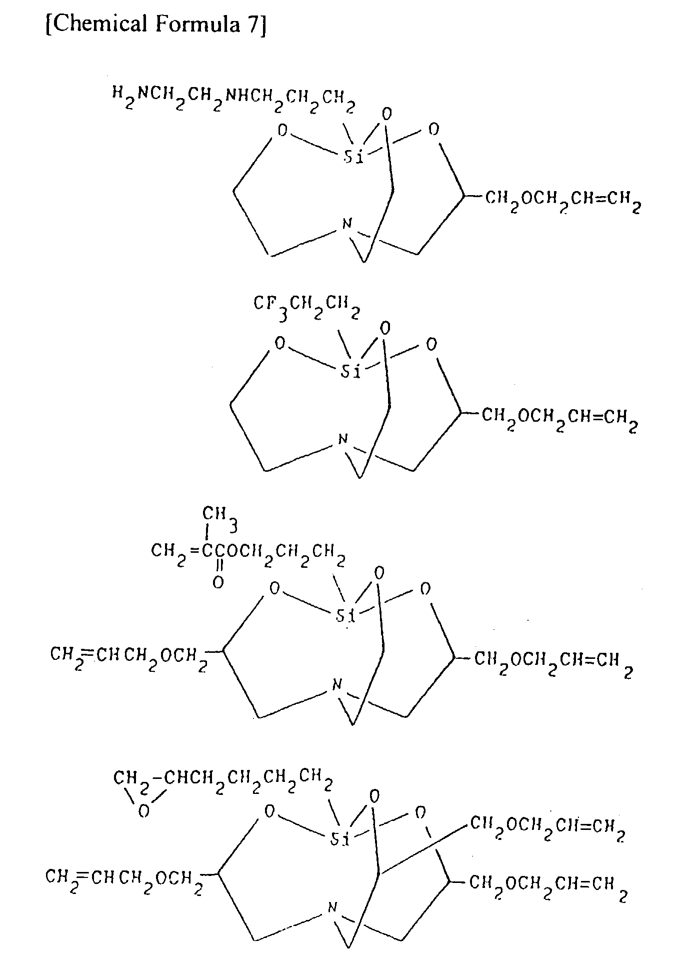

The silatrane derivative component C may be made, for example by reacting an epoxy compound described by general formula 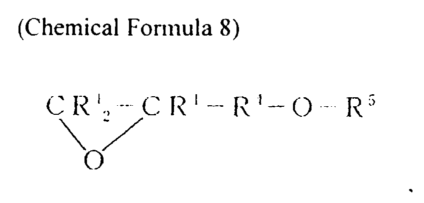 where each R¹ is independently selected from the group consisting of a hydrogen atom and alkyl groups; R⁴ is an alkylene group; and R⁵ is an alkenyl group; and an alkoxysilane compound described by general formula

R⁶Si(OR⁷)₃ ,

where each R⁶ is independently selected from alkyl groups, alkenyl groups, C₁ to C₁₀ alkoxy groups, acyloxyalkyl groups, and aminoalkyl groups; and R⁷ is a C₁ to C₁₀ alkyl group; with ammonia or an amine compound described by general formula

NH_{y}(CR¹ ₂CR¹ ₂OH)_{(3-y)} ,

where each R¹ is independently selected from the group consisting of a hydrogen atom and alkyl groups, and *y* is 1 or 2.

The epoxy resin is a starting material for forming the backbone of the silatrane derivative of component C. It is also a starting material for introducing alkenyloxyalkyl groups into the molecules of the silatrane derivative. Each R¹ in the above formula is independently selected from the group consisting of a hydrogen atom and alkyl groups. The same groups as above may be cited as examples for R¹. In addition, the R⁴ groups in the above formula are alkylene groups, examples of which include the same groups as above. Furthermore, the R⁵ groups in the above formula are alkenyl groups, examples of which include the same groups as above. C₃ to C₁₀ alkenyl groups are preferred, and the allyl group is particularly preferred. Allyl glycidyl ether and butenyl glycidyl ether may be cited as examples of such epoxy compounds.

The alkoxysilane compound is a starting material for forming the backbone of the silatrane derivative of component C. Each R⁶ in the above formula is independently selected from the group consisting of alkyl groups, alkenyl groups, C₁ to C₁₀ alkoxy groups, acyloxyalkyl groups, haloalkyl groups, and aminoalkyl groups. The same alkyl and alkoxy groups as those described above with reference to R³ may be cited as examples of the alkyl and alkenyl groups R⁶; the same alkoxy groups as those described above with reference to R³ may be cited as examples of the alkoxy groups R⁶; the same acyloxyalkyl groups as those described above with reference to R³ may be cited as examples of the acyloxyalkyl groups R⁶; and the same aminoalkyl groups as those described above with reference to R³ may be cited as examples of the aminoalkyl groups R⁶. In addition, R⁷ in the above formula is a C₁ to C₁₀ alkyl group, examples of which include methyl, ethyl, propyl, and butyl. Examples of such alkoxysilane compounds include tetramethoxysilane, tetraethoxysilane, methyltrimethoxysilane, methyltriethoxysilane, vinyltrimethoxysilane, vinyltriethoxysilane, phenyltrimethoxysilane, 3-methacryloxypropyltrimethoxysilane, 3,3,3-trifluoropropyltrimethoxysilane, nonafluorobutylethyltrimethoxysilane, 3-aminopropyltrimethoxysilane, 3-aminopropyltriethoxysilane, and *N*-(2-aminoethyl)-3-aminopropyltrimethoxysilane.

The ammonia or amine compound is a starting material for forming the backbone of the silatrane derivative component C. In the amine compound, the R¹ groups in the above formula are the same or different, and are each a hydrogen atom or an alkyl group, examples of which are the same as the groups listed above. In the above formula, *y* is 1 or 2. Examples of such amine compounds include 2-hydroxyethylamine, 2,2'-dihydroxyethylamine, and 2-hydroxy-2-methyl-ethylamine.

There are no restrictions on the amounts in which the epoxy compound and alkoxysilane compound are added with respect to the ammonia in the above-mentioned manufacturing method, but in order to suppress by-products and obtain the silatrane derivative at a good yield, when the reaction is conducted under conditions such that the ammonia will not be lost during the reaction, it is preferable for this epoxy compound to be used in an amount of 2 to 20 mol per mole of ammonia, with a range of 3 to 15 mol being even better. It is also preferable for the amount in which the alkoxysilane compound is added to be from 0.5 to 50 mol per mole of ammonia, with a range of 1 to 20 mol being even better. This means that it is recommended that the alkoxysilane compound be used in about a stoichiometric amount or an excess amount with respect to the ammonia in this method. In general, by-products will be suppressed, but an excess of alkoxysilane compound will remain behind if the alkoxysilane compound is used in an excess amount, but not so large an amount that the reaction will be slowed. This unreacted and remaining alkoxysilane compound can be separated and recovered from the silatrane derivative by distillation or the like as needed after the reaction. This reaction can also be conducted while ammonia gas is blown into the mixture of the epoxy compound and the alkoxysilane compound. When this reaction is conducted in an open system, part of the ammonia will not react and will be released outside the system, so it must be used in an excess amount large enough to compensate for this loss.

There are no restrictions on the amount in which the epoxy compound and alkoxysilane compound are added with respect to the amine compound in this manufacturing method, but in order to obtain the silatrane derivative at a good yield, when *y* in the amine compound is 1, the epoxy compound should be used in an amount of 0.5 to 10 mol per mole of the amine compound, with a range of 0.8 to 5 mol being even better. When *y* is 2 in the amine compound, the epoxy compound should be used in an amount of 1.5 to 20 mol, with a range of 1.8 to 10 mol being even better, and an amount of about 2 mol being particularly favorable. It is also preferable for the amount in which this alkoxysilane compound is added to be from 0.5 to 50 mol per mole of the amine compound, with a range of 1 to 20 mol being even better. This means that it is recommended that the alkoxysilane compound be used in about the stoichiometric amount or an excess amount with respect to the amine compound in this method. In general, by-products will be suppressed, but an excess of alkoxysilane compound will remain behind if the alkoxysilane compound is used in an excess amount, but not so large an amount that the reaction will be slowed. This unreacted and remaining alkoxysilane compound can be separated and recovered from the silatrane derivative by distillation or the like as needed after the reaction.

In the above-mentioned manufacturing method, the reaction will proceed at normal temperature or under heating, but heating up to 100°C is preferred in order to shorten the reaction time. The use of an organic solvent is optional in the above-described manufacturing method, and examples of organic solvents that can be used include hexane, heptane, octane, and other aliphatic hydrocarbons; toluene, xylene, and other aromatic hydrocarbons: methanol, ethanol, isopropanol, and other alcohols; acetone, methyl isobutyl ketone, and other ketones; diethyl ether, tetrahydrofuran, and other ethers; ethyl acetate, isoamyl acetate, and other esters; and dimethylformamide, dimethylacetamide, and other amide compounds. In particular, the use of an alcohol such as methanol or ethanol allows the reaction time to be shortened and the targeted silatrane derivative to be obtained at a better yield. In the above-described manufacturing method, when an alcohol is added, it should preferably have the same number of carbon atoms as the silicon-bonded alkoxy groups in the starting material alkoxysilane compound because of an exchange reaction that can occur with the silicon-bonded alkoxy groups. Also, when an alcohol is added in the above-described manufacturing method, the reaction can be markedly shortened and the yield of the obtained silatrane derivative can be enhanced by conducting the reaction at the reflux temperature of the alcohol.

The content of component C in the present composition should fall within a range of 0.1 to 10 weight parts per 100 weight parts of component A. This is because the adhesion of the resulting silicone rubber to organic resins tends to decrease when the content of component C falls below the lower limit of this range, and the mechanical strength of the resulting silicone rubber tends to decrease when the content exceeds the upper limit of this range.

The organic peroxide comprising component D is a component designed to cure the present composition and may be benzoyl peroxide, bis(*o*-methyl benzoyl peroxide), bis(*m*-methyl benzoyl peroxide), bis(*p*-methyl benzoyl peroxide), 2,3-dimethyl benzoyl peroxide, 2,4-dimethyl benzoyl peroxide, 2,6-dimethyl benzoyl peroxide, 2,3,4-trimethyl benzoyl peroxide, 2,4,6-trimethyl benzoyl peroxide, or other methyl-substituted benzoyl peroxides; *t*-butyl perbenzoate, dicumyl peroxide, 2,5-dimethyl-2,5-di(*t*-butylperoxy)hexane, *t*-butylperoxyisopropyl monocarbonate, and *t*-butylperoxyacetate; or a mixture of two or more of the above peroxides.

Although the content of component D in the present composition is not limited in any way as long as the present composition can be cured, this content is preferably 0.1 to 20 weight parts, and ideally 0.1 to 10 weight parts, per 100 weight parts of component A. This is because the resulting silicone rubber composition may not be adequately cured when the content of component D falls below the lower limit of this range, and the resulting silicone rubber undergoes foaming when the content exceeds the upper limit of this range.

Although the present composition is prepared by mixing the aforementioned components A to D, other components may also be added as needed. Examples of such components include nonreinforcing fillers, filler surface treatment agents, plasticizers, inorganic pigments, heat stabilizers, flame retardants, internal mold release agents, and other known additives. Examples of nonreinforcing fillers include diatomaceous earth, quartz powder, calcium carbonate, mica, talc, magnesium oxide, aluminum oxide, aluminum hydroxide, and magnesium hydroxide. In addition, silanol-terminated dimethylsiloxane oligomers, silanol-terminated dimethylsiloxane/methylvinylsiloxane copolymer oligomers, silanol-terminated methylphenylsiloxane oligomers, and other siloxane oligomers may, for example, be added to the silicone rubber composition as treating agents for reinforcing fillers comprising component B, as surface treatment agents for uniformly dispersing such nonreinforcing fillers, or as plasticizers for the silicone rubber composition. Red iron oxide, titanium dioxide, and the like may, for example, be added as inorganic pigments. Rare-earth oxides, rare-earth hydroxides, cerium silanolate, and cerium fatty acid salts may, for example, be added as heat stabilizers. Platinum, platinum compounds, benzotriazoles, fumed titanium dioxide, manganese carbonate, and zinc carbonate may, for example, be added as flame retardants. Calcium stearate and other fatty acid salts may, for example, be added as internal mold release agents.

The present composition is not limited in terms of preparation method and may, for example, be prepared by a method in which the aforementioned components A to D and other optional components are milled using a two-roll mill, kneader mixer, or the like. It is also possible to prepare a silicone rubber base by milling components A and B together with other optional components (for example, nonreinforcing fillers and processing aids), and then adding the aforementioned components C and D to this silicone rubber base.

Examples of methods used to cure the present composition include those in which the composition is heated to a temperature above the decomposition temperature of the organic peroxide contained as the aforementioned component D but below the scorching temperature of the composition. Specifically, it is possible to adopt a method in which the composition is heated to a temperature of 130 to 200°C, and particularly 140 to 170° C.

When cured, the present composition has excellent mold release properties and adheres well to polyethylene resins, polypropylene resins, PET resins, PBT resins, and other saturated polyester resins; polystyrene resins, AS resins, ABS resins, polyamide resins, polycarbonate resins, acrylic resins, methacrylic resins, and other thermoplastic resins; phenol resins, urea resins, melamine resins, unsaturated polyester resins, alkyd resins, epoxy resins, and other thermosetting resins; organic resins obtained by reinforcing the aforementioned resins with glass fibers or the like; and other organic resins, and is therefore suitable for use as a silicone rubber composition for injection molding, insert molding, multicolor molding, and other types of composite molding.

The silicone rubber composition of the present invention will now be described in detail through examples. The viscosity mentioned in these examples is the value at 25°C.

Reference Example. 12.2 g (0.2 mol) Of 2-hydroxyethylamine, 81.7 g (0.6 mol) of methyltrimethoxysilane, 57.1 g (0.5 mol) of allyl glycidyl ether, and 32 g of methanol were put in a 500-mL, four-neck flask equipped with an agitator, a thermometer, and a reflux condenser. The system was heated and agitated for 8 hours at the reflux temperature of methanol. The mixture obtained was then transferred to a flask, and the low-boiling component was distilled off by using a rotary evaporator, yielding 63.3 g of a faintly yellow transparent liquid. This transparent liquid was subjected to ²⁹Si-nuclear magnetic resonance analysis and ¹³C-nuclear magnetic resonance analysis, which confirmed that the silatrane derivative described by the following formula was produced. This silatrane derivative was contained in a proportion of at least 90 wt%.

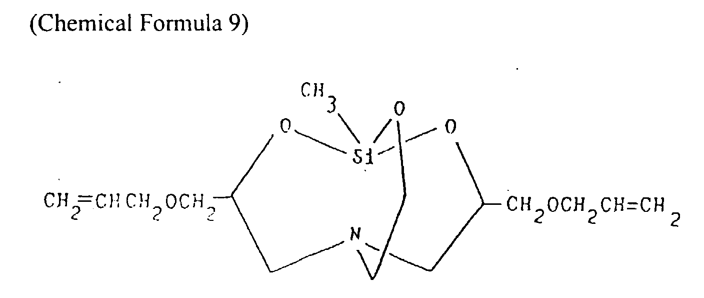

Example 1. 100 Weight parts of a dimethylvinylsiloxy-terminated dimethylsiloxane/methylvinylsiloxane copolymer in the form of a gum having a degree of polymerization of 5.000 and comprising 99.87 mol% dimethylsiloxane units and 0.13 mol% methylvinylsiloxane units, 45 weight parts of precipitated silica with a BET specific surface area of 200 m²/g, and 4.5 weight parts of a silanol-terminated dimethylsiloxane oligomer with a viscosity of 30 mPa s were introduced into a kneader mixer and mixed. The mixture was then heated and kneaded for 60 minutes at 175°C, yielding a silicone rubber base compound.

Then, 1 weight part of the silatrane derivative prepared in Reference Example 1 and 0.3 weight part of a paste containing equal amounts of *t*-butylperoxyisopropyl monocarbonate and a trimethylsiloxy-terminated dimethylpolysiloxane with a viscosity of 50 mPa-s were added to 100 weight parts of the base compound on a two-roll mill, and the ingredients were uniformly blended to yield silicone rubber composition I.

A PBT resin test piece was then placed in a mold, a sheet of silicone rubber composition I prepared by the use of a two-roll mill was placed on top, and the material was heated and cured for 10 minutes at 150°C. The adhesion of the resulting silicone rubber to organic resins and its mold release properties were observed, the results of which are given in Table 1. Adhesion of the silicone rubber to organic resins was graded in the following manner: a "○" was given if the silicone rubber underwent cohesive failure, a "Δ" was given if the silicone rubber could be peeled off along the interface with an organic resin but still had adequate adhesion, and an "×" was given if the silicone rubber could be easily peeled off from the organic resin. In the evaluation of the mold release properties of the silicone rubber, a "○" was given if the silicone rubber came away from the mold easily, whereas an "×" was given if the silicone rubber did not come away easily.

(Comparison Example 1). Silicone rubber composition II was prepared in the same manner as in Example 1 except that the silatrane derivative used in Example 1 was not added. Adhesion of the silicone rubber composition II to PBT resin test pieces and its mold release properties were evaluated in the same manner as in Example 1. The results are shown in Table 1.

**Table 1**

| | EXAMPLE 1 | Comparison Example 1 |
|---|---|---|
| Adhesion to PBT resin | ○ | × |
| Mold release properties | ○ | ○ |

Example 2. 100 Weight parts of a dimethylvinylsiloxy-terminated dimethylsiloxane/methylvinylsiloxane copolymer in the form of a gum having a degree of polymerization of 5,000 and comprising 99.87 mol% dimethylsiloxane units and 0.13 mol% methylvinylsiloxane units, 45 weight parts of fumed silica with a BET specific surface area of 200 m²/g, and 8 weight parts of a silanol-terminated dimethylsiloxane oligomer with a viscosity of 30 mPa·s were introduced into a kneader mixer and mixed. The mixture was then heated and kneaded for 60 minutes at 175°C, yielding a silicone rubber base compound.

Then, 1 weight part of the silatrane derivative prepared in Reference Example 1 and 0.6 weight part of a paste containing equal amounts of *t*-butylperoxyisopropyl monocarbonate and a trimethylsiloxy-terminated dimethylpolysiloxane with a viscosity of 50 mPa·s were added to 100 weight parts of the base compound on a two-roll mill, and the ingredients were uniformly blended, yielding silicone rubber composition III.

Silicone rubber composition III was evaluated in the same manner as in Example 1 for its mold release properties and adhesion to PBT resin test pieces. The results are shown in Table 2.

Example 3. 1 Weight part of the silatrane derivative prepared in Reference Example 1 and 0.6 weight part of a paste containing equal amounts of 2,5-dimethyl-2,5-di(*t*-butylperoxy)hexane and a trimethylsiloxy-terminated dimethylpolysiloxane with a viscosity of 50 mPa·s were added on a two-roll mill to 100 weight parts of the silicone rubber base compound prepared in Example 1, and the ingredients were uniformly blended, yielding silicone rubber composition IV.

An FRP resin test piece (epoxy resin product reinforced with glass fibers) was then placed in a mold, a sheet of silicone rubber composition IV prepared on a two-roll mill was placed on top, and the material was heated and cured for 10 minutes at 165°C. Silicone rubber composition IV was evaluated in the same manner as in Example 1 for its mold release properties and adhesion to PBT resin test pieces. The results are shown in Table 2.

**Table 2**

| | EXAMPLE 2 | EXAMPLE 3 |
|---|---|---|
| Adhesion to PBT resin | ○ | ― |
| Adhesion to FRP resin | ― | ○ |
| Mold release properties | ○ | ○ |

## Claims

1. A silicone rubber composition comprising
(A) 100 weight parts of a polydiorganosiloxane,
(B) 10 to 100 weight parts of a reinforcing filler,
(C) 0.1 to 10 weight parts of a silatrane derivative of general formula 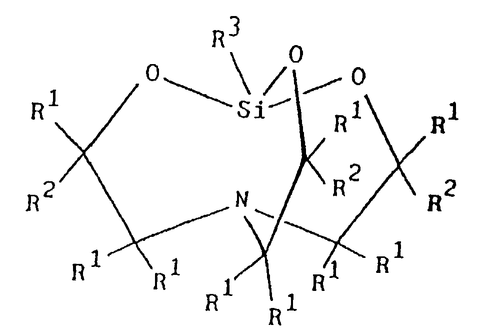 where each R¹ is independently selected from a hydrogen atom and alkyl groups, each R² is independently selected from a hydrogen atom, alkyl groups, and alkenyloxyalkyl groups of general formula
-R⁴-O-R⁵
where R⁴ is an alkylene group and R⁵ is an alkenyl group; at least one R² is an alkenyloxyalkyl group; and R³ is selected from alkyl groups, alkenyl groups, C₁ to C₁₀ alkoxy groups, glycidoxyalkyl groups, oxiranylalkyl groups, acyloxyalkyl groups, and aminoalkyl groups; and
(D) an organic peroxide in an amount sufficient to cure the composition.

2. The silicone rubber composition according to Claim 1, where component A is a polydiorganosiloxane that has a degree of polymerization of 1000 to 30,000 and has the average unit formula
RₐSiO_{(4-a)/2} ,
where R is a substituted or unsubstituted monovalent hydrocarbon group and *a* is a number from 1.9 to 2.1.

3. The silicone rubber composition according to Claim 1, where component A is polydiorganosiloxane having at least two silicon-bonded alkenyl groups in each molecule.

4. The silicone rubber composition according to Claim 2, where component A is polydiorganosiloxane having at least two silicon-bonded alkenyl groups in each molecule.

5. The silicone rubber composition according to any of Claims 2 to 4, where component A is a polydiorganosiloxane having a degree of polymerization of 3000 to 30,000.

6. The silicone rubber composition according to any of Claims 1 to 5, where the reinforcing filler is a silica whose surface has been rendered hydrophobic.

7. The silicone rubber composition according to any of Claims 1 to 6, where R¹ is a hydrogen atom or methyl, R⁴ is methylene, and R⁵ is allyl.

8. The silicone rubber composition according to any of Claims 1 to 7, where the organic peroxide is present in an amount of 0.1 to 20 weight parts per 100 weight parts of component (A).

9. The silicone rubber composition according to Claim 8, where the organic peroxide is present in an amount of 0.1 to 10 weight parts per 100 weight parts of component (A).

10. The silicone rubber composition according to any of Claims 1 to 6, 8 and 9, where the silatrane derivative has the formula

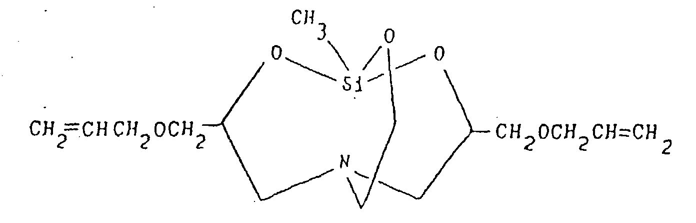

11. The silicone rubber composition according to Claim 10, where component A is a dimethylvinylsiloxy-terminated dimethylsiloxane/methylvinylsiloxane copolymer.
